# EUROPÄISCHE PATENTSCHRIFT

(11) **EP 1 636 488 B1**
(45) Veröffentlichungstag und Bekanntmachung des Hinweises auf die Patenterteilung: **23.01.2008**
(21) Anmeldenummer: 04726424.7
(22) Anmeldetag: 08.04.2004
(51) Int. Cl.: F02M 59/46, F04B 53/10

(54) **RÜCKSCHLAGVENTIL, INSBESONDERE FÜR EINE HOCHDRUCKPUMPE EINER KRAFTSTOFFEINSPRITZEINRICHTUNG FÜR EINE BRENNKRAFTMASCHINE**
CHECK VALVE, ESPECIALLY FOR A HIGH PRESSURE PUMP OF A FUEL INJECTION DEVICE FOR AN INTERNAL COMBUSTION ENGINE
SOUPAPE DE NON-RETOUR CONÇUE EN PARTICULIER POUR UNE POMPE HAUTE PRESSION D'UN DISPOSITIF D'INJECTION DE CARBURANT POUR UN MOTEUR A COMBUSTION INTERNE

(30) Priorität: 22.05.2003 DE 10323147; 06.10.2003 DE 10346211
(43) Veröffentlichungstag der Anmeldung: 22.03.2006
(60) Teilanmeldung: 06117087.4
(73) Patentinhaber: ROBERT BOSCH GMBH, 70442 Stuttgart (DE)
(72) Erfinder: NIESLONY, Markus, 73084 Salach (DE); SCHOETZ, Alfons, 71254 Ditzingen (DE); DISTEL, Matthias, 73760 Ostfildern (DE); KOEHLER, Achim, 71254 Ditzingen (DE); BREDOW, Falko, 71686 Remseck (DE); KIEL, Waldemar, 70839 Gerlingen (DE); ALEKER, Jochen, 70499 Stuttgart (DE)
(86) Internationale Anmeldenummer: PCT/DE2004/000741
(87) Internationale Veröffentlichungsnummer: WO 2004/109093

(56) Entgegenhaltungen:
- EP-A- 1 411 283
- AU-B- 417 351
- DE-A- 19 744 577
- US-B1- 6 345 608
- US-B2- 6 558 142

## Beschreibung

Die Erfindung geht aus von einem Rückschlagventil nach der Gattung des Anspruchs 1.

Ein solches Rückschlagventil ist durch die AU417351 B2 bekannt. Dieses Rückschlagventil weist ein in eine Aufnahme eingesetztes Ventilgehäuse auf, in dem ein kolbenförmiges Ventilglied längsverschiebbar geführt ist. Das Ventilglied wirkt mit einem am Ventilgehäuse ausgebildeten Ventilsitz zusammen und ist in Schliessrichtung durch eine vorgespannte Schliessfeder und in Öffnungsrichtung durch den in einem Zulauf herrschenden Druck beaufschlagt. Das Ventilglied ist von der Seite des Ventilsitzes her in das Ventilgehäuse eingesetzt. Das Ventilgehäuse ist einstückig und topfförmig ausgebildet und weist einen Boden sowie einen eine Ausnehmung begrenzenden Mantelbereich auf. Das Ventilgehäuse weist mit dem offenen Ende seiner Ausnehmung aus der Aufnahme heraus, wobei der Ventilsitz am Boden des Ventilgehäuses der Ausnehmung abgewandt angeordnet ist. Das Ventilglied ragt mit einem Schaft durch eine Bohrung im Boden des Ventilgehäuses in die Ausnehmung hinein, in der die Schliessfeder angeordnet ist. Die Ausnehmung ist mit einem Zulaufbereich des Rückschlagventils verbunden. Die Einströmung aus dem Zulaufbereich und die Ausströmung bei diesem Rückschlagventil erfolgt in axialer Richtung, wobei die Ausnehmung einen Teil des Einströmwegs bildet, so dass diese offen sein muss. Eine Verwendung dieses Rückschlagventils in Fällen, bei denen keine axiale Einströmung erfolgen kann, ist somit nicht möglich.

### Vorteile der Erfindung

Das erfindungsgemäße Rückschlagventil mit den Merkmalen gemäß Anspruch 1 hat demgegenüber den Vorteil, dass bei diesem eine Einströmung zumindest annähernd senkrecht zur Längsachse des Ventilglieds ermöglicht ist, wobei eine Abdichtung der Ausnehmung zur Außenseite der Aufnahme sichergestellt ist.

Die Ausbildung gemäß Anspruch 2 ermöglicht eine einfache Abstützung der Schliessfeder.

### Zeichnung

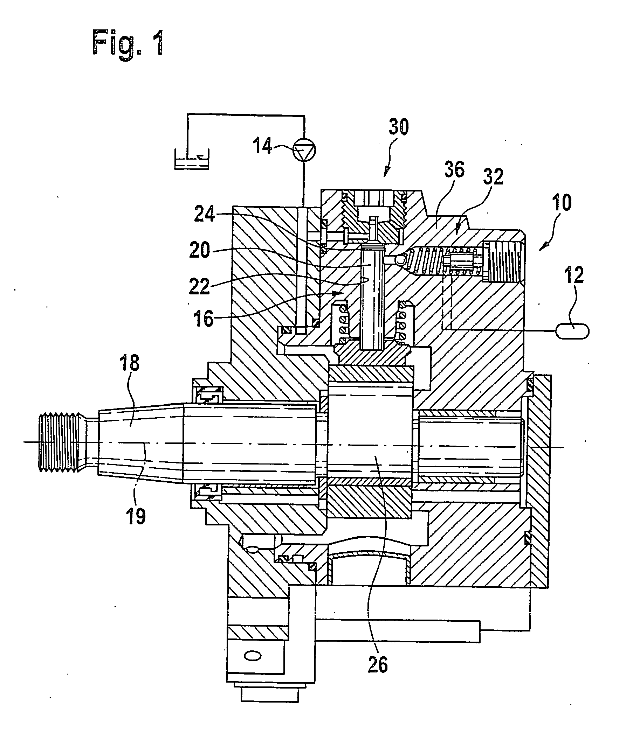

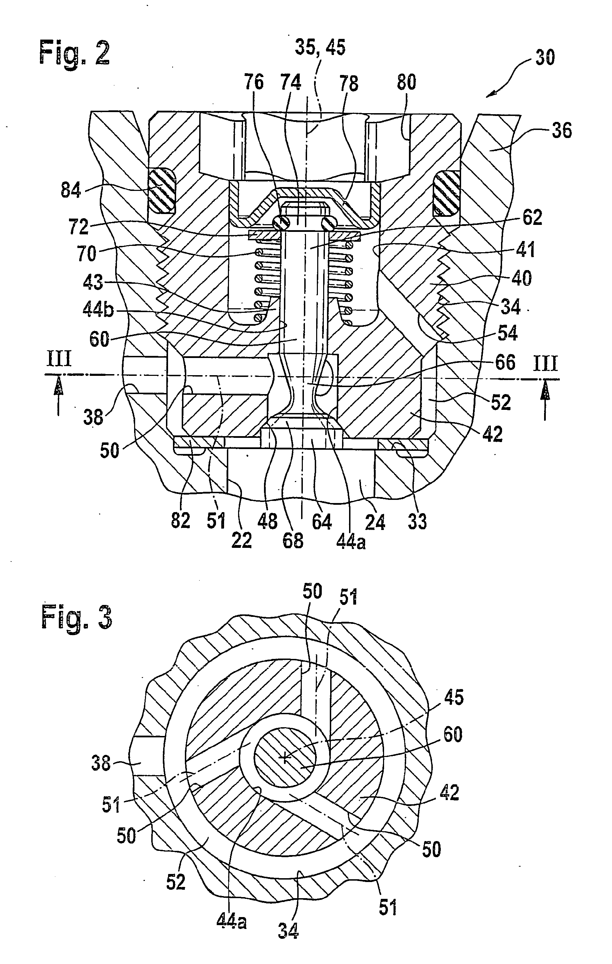

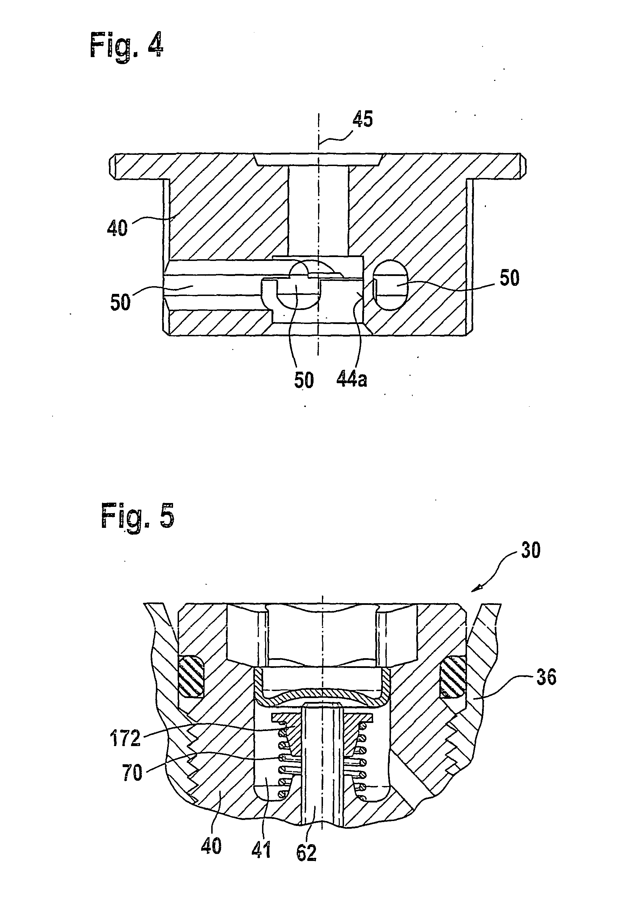

Ein Ausführungsbeispiel der Erfindung ist in der Zeichnung dargestellt und in der nachfolgenden Beschreibung näher erläutert. Es zeigen Figur 1 eine Hochdruckpumpe für eine Kraftstoffeinspritzeinrichtung einer Brennkraftmaschine, Figur 2 ein Rückschlagventil der Hochdruckpumpe in vergrößerter Darstellung in einem Längsschnitt, Figur 3 das Rückschlagventil in einem Querschnitt entlang Linie III-III in Figur 2, Figur 4 das Rückschlagventil gemäß einer modifizierten Ausführung in einem Schnitt entlang Linie IV-IV in Figur 3 und Figur 5 ausschnittsweise das Rückschlagventil gemäß einer weiteren modifizierten Ausführung.

### Beschreibung des Ausführungsbeispiels

In Figur 1 ist eine Hochdruckpumpe 10 für eine Kraftstoffeinspritzeinrichtung einer Brennkraftmaschine dargestellt, die vorzugsweise eine selbstzündende Brennkraftmaschine ist. Durch die Hochdruckpumpe 10 wird Kraftstoff unter Hochdruck in einen Speicher 12 gefördert, aus dem Kraftstoff zur Einspritzung an der Brennkraftmaschine entnommen wird. Der Hochdruckpumpe 10 wird durch eine Förderpumpe 14 Kraftstoff zugeführt. Die Hochdruckpumpe 10 weist wenigstens ein Pumpenelement 16 auf, das einen zumindest mittelbar durch eine Antriebswelle 18 der Hochdruckpumpe 10 in einer Hubbewegung angetriebenen Pumpenkolben 20 aufweist. Der Pumpenkolben 20 ist in einer zumindest annähernd radial zur Antriebswelle 18 verlaufenden Zylinderbohrung 22 dicht geführt und begrenzt in dem der Antriebswelle 18 abgewandten äusseren Endbereich der Zylinderbohrung 22 einen Pumpenarbeitsraum 24. Die Antriebswelle 18 weist einen Nocken oder einen zu ihrer Drehachse 19 exzentrischen Wellenabschnitt 26 auf, über den bei der Drehbewegung der Antriebswelle 18 die Hubbewegung des Pumpenkolbens 20 bewirkt wird. Der Pumpenarbeitsraum 24 ist über ein in den Pumpenarbeitsraum 24 öffnendes, als Rückschlagventil ausgebildetes Einlassventil 30 mit einem Kraftstoffzulauf von der Förderpumpe 14 her verbindbar. Der Pumpenarbeitsraum 24 ist außerdem über eine aus dem Pumpenarbeitsraum 24 öffnendes, als Rückschlagventil ausgebildetes Auslassventil 32 mit einem Kraftstoffablauf zum Speicher 12 hin verbindbar. Beim Saughub bewegt sich der Pumpenkolben 20 in der Zylinderbohrung 22 radial nach innen, so dass das Volumen des Pumpenarbeitsraums 24 vergrößert wird. Beim Saughub des Pumpenkolbens 20 ist wegen der dabei bestehenden Druckdifferenz das Einlassventil 30 geöffnet, da von der Förderpumpe 14 ein höherer Druck erzeugt wird als der im Pumpenarbeitsraum 24 herrschende Druck, so dass von der Förderpumpe 14 geförderter Kraftstoff in den Pumpenarbeitsraum 24 angesaugt wird. Das Auslassventil 32 ist beim Saughub des Pumpenkolbens 20 geschlossen, da im Speicher 12 ein höherer Druck als im Pumpenarbeitsraum 24 herrscht.

Nachfolgend wird das Einlassventil 30 anhand der Figuren 2 bis 4 näher beschrieben. Das Einlassventil 30 ist in eine sich radial nach aussen an die Zylinderbohrung 22 anschliessende Bohrung 34 eines Gehäuseteils 36 der Hochdruckpumpe 10 eingesetzt. Die Bohrung 34 ist dabei im Durchmesser gegenüber der Zylinderbohrung 22 größer ausgebildet. Das Gehäuseteil 36 kann beispielsweise ein Zylinderkopf sein, der mit einem andere Gehäuseteil, in dem die Antriebswelle 18 gelagert ist, verbunden ist oder ein Gehäuseteil sein, in dem auch die Antriebswelle 18 gelagert ist. In die Bohrung 34 mündet nahe deren der Zylinderbohrung 22 zugewandtem Endbereich beispielsweise etwa radial zur Achse der Bohrung 34 ein Kraftstoffzulaufkanal 38, der mit der Förderpumpe 14 verbunden ist. Das Einlassventil 30 weist ein einstückiges Ventilgehäuse 40 auf, das topfförmig ausgebildet ist. Das Ventilgehäuse 40 weist dabei einen eine Ausnehmung 41 begrenzenden Mantelbereich und einen an diesen anschliessenden Boden 42 auf. Das Ventilgehäuse 40 weist mit dem offenen Ende seiner Ausnehmung 41 nach aussen. Das Ventilgehäuse 40 weist mit seinem Boden 42 nach innen zur Zylinderbohrung 22 und im Boden 42 ist eine Bohrung 44 mit ihrer Längsachse 45 zumindest annähernd koaxial zur Zylinderbohrung 22 eingebracht. Die Bohrung 44 weist zur Zylinderbohrung 22 hin einen Abschnitt 44a mit großem Durchmesser und zur Ausnehmung 41 des Ventilgehäuses 40 hin einen Abschnitt 44b mit kleinerem Durchmesser auf. An der Mündung des Bohrungsabschnitts 44a zur Zylinderbohrung 22 hin ist ein Ventilsitz 48 ausgebildet, der beispielsweise zumindest annähernd kegelförmig ausgebildet ist. Das Ventilgehäuse 40 kann beispielsweise als Schmiedeteil ausgebildet sein, in das nach dem Schmieden die Bohrung 44 eingebracht und der Ventilsitz 48 hergestellt wird.

Im Boden 40 des Ventilgehäuses 40 ist wenigstens ein zumindest annähernd senkrecht zur Längsachse 45 der Bohrung 44 verlaufender Zulaufkanal 50 eingebracht, der einerseits am Aussenmantel des Bodens 42 und andererseits im Bohrungsabschnitt 44a mündet. Vorzugsweise sind mehrere, beispielsweise drei über den Umfang des Ventilgehäuses 40 gleichmäßig verteilte Zulaufkanäle 50 vorgesehen. Die Zulaufkanäle 50 münden dabei in den Bohrungsabschnitt 44a derart, dass sich ihre Längsachsen 51 mit der Längsachse 45 des Bohrungsabschnitts 44a nicht schneiden und die Zulaufkanäle 50 zumindest annähernd tangential in den Bohrungsabschnitt 44a münden, wie dies in Figur 3 dargestellt ist. Das Ventilgehäuse 40 weist im Bereich des Bodens 42 einen etwas verringerten Durchmesser auf, so dass zwischen dem Aussenmantel des Bodens 42 und der Bohrung 34 ein Ringraum 52 gebildet ist. In den Ringraum 52 münden der Zulaufkanal 38 und die Zulaufkanäle 50 im Boden 42. Im Mantel des Ventilgehäuses 40 ist wenigstens eine Bohrung 54 eingebracht, die die Ausnehmung 41 des Ventilgehäuses 40 mit dem Ringraum 52 verbindet.

Die Zulaufkanäle 50 können als Bohrungen ausgebildet sein, wie dies in den Figuren 2 und 3 dargestellt ist. Alternativ können die Zulaufkanäle 50 auch wie in Figur 4 dargestellt einen nichtkreisförmigen Querschnitt aufweisen. Dabei können die Zulaufkanäle 50 insbesondere so ausgebildet sein, dass deren Breite in Richtung der Längsachse 45 der Bohrung 44 größer ist als senkrecht zur Längsache 45, wie dies in Figur 4 dargestellt ist. Die Zulaufkanäle 50 können mit dieser Querschnittsform beispielsweise hergestellt werden, indem ausgehend von einer Bohrung durch Erodieren der nichtkreisförmige Querschnitt hergestellt wird. Der Endbereich der Zulaufkanäle 50 ist vorzugsweise wie in Figur 4 dargestellt in der Einmündung in die Bohrung 44 gerundet ausgebildet. Die vorstehend beschriebene Ausbildung des wenigstens einen Zulaufkanals 50 ist unabhängig von der einstückigen Ausbildung des Ventilgehäuses 40 und kann auch bei beliebigen anderen, auch mehrteiligen Ausführungen des Ventilgehäuses 40 verwendet werden.

Das Einlassventil 30 weist ein kolbenförmiges Ventilglied 60 auf, das mit einem Schaft 62 im Bohrungsabschnitt 44b verschiebbar geführt ist und mit dem Endbereich des Schafts 62 aus dem Bohrungsabschnitt 44b heraus in die Ausnehmung 41 des Ventilgehäuses 40 ragt. Vom Boden 42 kann dabei ein in die Ausnehmung 41 ragender Ansatz 43 abstehen, um eine große Länge des Bohrungsabschnitts 44b und damit eine gute Führung des Schafts 62 des Ventilglieds 60 sicherzustellen. An seinem dem Schaft 62 abgewandten Endbereich weist das Ventilglied 60 einen im Durchmesser gegenüber dem Schaft 62 größeren Schließkörper 64 auf. In einem zwischen dem Schließkörper 64 und dem Schaft 62 angeordneten Bereich 66, der im Bohrungsabschnitt 44a angeordnet ist, weist das Ventilglied 60 eine Einschnürung auf. Der eingeschnürte Bereich 66 des Ventilglieds 60 ist vorzugsweise gerundet ausgebildet. Am Schließkörper 64 ist am Übergang zum eingeschnürten Bereich 66 eine Dichtfläche 68 ausgebildet, die beispielsweise kegelförmig ausgebildet sein kann.

In der Ausnehmung 41 des Ventilgehäuses 40 ist eine Schliessfeder 70 angeordnet, die sich einerseits an der Innenseite des Bodens 42 und andererseits über einen Federteller 72 am Ventilglied 60 abstützt. Am in der Ausnehmung 41 des Ventilgehäuses 40 angeordneten Endbereich des Schafts 62 des Ventilglieds 60 ist dabei beispielsweise eine Ringnut 74 eingebracht, in die ein federnder Sicherungsring 76 eingerastet ist, durch den der Federteller 72 gehalten wird. Durch die vorgespannte Schliessfeder 70 wird das Ventilglied 60 in seiner Schliessrichtung beaufschlagt, in der es mit seiner Dichtfläche 68 am Ventilsitz 48 zur Anlage kommt. Das offene Ende der Ausnehmung 41 des Ventilgehäuses 40 ist mit einem Deckel 78 verschlossen, der beispielsweise in die Ausnehmung 41 eingepresst ist.

Das Ventilgehäuse 40 ist vorzugsweise in die Bohrung 34 des Gehäuseteils 36 eingeschraubt, wobei das Ventilgehäuse 40 ein Aussengewinde und die Bohrung 34 ein Innengewinde aufweist. Am äusseren Randbereich der Ausnehmung 41 ist ein Profil 80 angebracht, um mit einem entsprechenden Werkzeug zu einer Verdrehung am Ventilgehäuse 40 angreifen zu können. Eine Abdichtung zwischen der am Übergang von der Zylinderbohrung 22 zur Bohrung 34 gebildeten Ringschulter 33 und der dieser zugewandten Stirnseite des Bodens 42 des Ventilgehäuses 40 kann durch eine zwischen Ringschulter 33 und Boden 42 angeordnete Dichtscheibe 82 sichergestellt werden. Beim Einschrauben des Ventilgehäuses 40 in die Bohrung 34 wird die Dichtscheibe 82 elastisch oder plastisch verformt und stellt dadurch die Abdichtung sicher. Die Dichtscheibe kann aus Kunststoff oder aus weichem Metall, beispielsweise Weicheisen oder Kupfer bestehen. Alternativ kann die Dichtscheibe 82 auch entfallen, wobei dann am Boden 42 des Ventilgehäuses 40 oder an der Ringschulter 33 eine schmale erhabene Dichtkante ausgebildet ist, die beim Einschrauben des Ventilgehäuses 40 in die Bohrung 34 elastisch oder plastisch verformt wird und die Abdichtung sicherstellt. Weiterhin alternativ können die Ringschulter 33 und die Stirnseite des Bodens 42 auch mit ebenen Dichtflächen versehen sein, die beim Einschrauben des Ventilgehäuses 40 in die Bohrung 34 aufeinander gepresst werden. Eine Abdichtung der Bohrung 34 nach aussen erfolgt durch einen zwischen dem Aussenmantel des Ventilgehäuses 40 und der Bohrung 34 nahe dem äusseren Ende des Ventilgehäuses 40 eingespannten Dichtring 84.

Das Ventilglied 60 ist in seiner Öffnungsrichtung von dem über die Zulaufbohrungen 50 dem Bohrungsabschnitt 44a zugeführten, durch die Förderpumpe 14 erzeugten Druck beaufschlagt. Die vom Druck in Öffnungsrichtung beaufschlagte Fläche des Ventilglieds 60 am Übergang zum Schließkörper 64 ist dabei größer als die in Schließrichtung beaufschlagte Fläche zum Schaft 62 hin, so dass eine in Öffnungsrichtung auf das Ventilglied 60 wirkende Kraft erzeugt wird. Beim Saughub des Pumpenkolbens 20 herrscht im Kraftstoffzulauf ein durch die Förderpumpe 14 erzeugter höherer Druck als im Pumpenarbeitsraum 24, so dass das Ventilglied 60 gegen die Kraft der Schliessfeder 70 öffnet und mit seiner Dichtfläche 68 vom Ventilsitz 48 abhebt und dadurch einen ringförmigen Durchflussquerschnitt in den Pumpenarbeitsraum 24 freigibt. Das Einströmen des Kraftstoffs von den Zulaufbohrungen 50 in den Bohrungsabschnitt 44a erfolgt dabei infolge der tangentialen Mündung der Zulaufbohrungen 50 in den Bohrungsabschnitt 44a mit geringen Strömungsverlusten. Durch die tangentiale Mündung der Zulaufbohrungen 50 erhält der einströmende Kraftstoff einen Drall. Der Auslauf der Zulaufbohrungen 50 im Bohrungsabschnitt 44a kann dabei gerundet sein. Durch die gerundete Ausbildung des eingeschnürten Bereichs 66 des Ventilglieds 60 erfolgt weiter eine Ausströmung des Kraftstoffs aus dem Bohrungsabschnitt 44a durch den Ringspalt zwischen der Dichtfläche 68 des Ventilglieds 60 und dem Ventilsitz 48 in den Pumpenarbeitsraum 24. Somit wird eine gute Befüllung des Pumpenarbeitsraums 24 ermöglicht. Ein eventueller Verschleiss der Dichtfläche 68 des Ventilglieds 60 und des Ventilsitzes 48 am Ventilgehäuse 40 führt nicht zu einer Änderung der druckbeaufschlagten Flächen des Ventilglieds 60 und damit nicht zu einer Änderung des Öffnungsdifferenzdruckes des Einlassventils 30. Die Ausnehmung 41 des Ventilgehäuses 40 ist über die Bohrung 54 mit dem Ringraum 52 verbunden, so dass beim Öffnungshub des Ventilgliedes 60 von diesem aus der Ausnehmung 41 verdrängter Kraftstoff in den Ringraum 52 strömen kann und beim Schließhub aus dem Ringraum 52 Kraftstoff in die Ausnehmung 41 einströmen kann. Hierdurch wird ein schnelles Schließen des Einlassventils 30 erreicht und ein Druckanstieg in der Ausnehmung 41 und eine hierdurch bewirkte Belastung des Deckels 78 vermieden.

In Figur 5 ist das Einlassventil 30 ausschnittsweise gemäß einer gegenüber der Ausführung in Figur 2 modifizierten Ausführung dargestellt. Der grundsätzliche Aufbau des Einlassventils ist dabei unverändert, es ist lediglich die Ausbildung und Befestigung des Federtellers 172 auf dem Schaft 62 des Ventilglieds 60 modifiziert. Der Federteller 172 ist hülsenförmig ausgebildet und beispielsweise auf den Schaft 62 des Ventilglieds 60 aufgepresst. Bei dieser Ausbildung können somit die bei der Ausführung gemäß Figur 2 vorgesehene Ringnut 74 und der Sicherungsring 76 entfallen, so dass der Aufbau des Einlassventils 30 entsprechend vereinfacht ist.

## Patentansprüche

1. Rückschlagventil, insbesondere für eine Hochdruckpumpe einer Kraftstoffeinspritzeinrichtung für eine Brennkraftmaschine, mit einem in eine Aufnahme (34) eingesetzten Ventilgehäuse (40), in dem ein kolbenförmiges Ventilglied (60) längsverschiebbar geführt ist, das mit einem am Ventilgehäuse (40) ausgebildeten Ventilsitz (48) zusammenwirkt, wobei das Ventilglied (60) in Schliessrichtung durch eine vorgespannte Schliessfeder (70) und in Öffnungsrichtung durch den in einem Zulauf (44a) herrschenden Druck beaufschlagt ist, wobei das Ventilglied (60) von der Seite des Ventilsitzes (48) her in das Ventilgehäuse (40) eingesetzt ist, wobei das Ventilgehäuse (40) einstückig und topfförmig ausgebildet ist, wobei das Ventilgehäuse (40) einen Boden (42) sowie einen eine Ausnehmung (41) begrenzenden Mantelbereich aufweist, wobei das Ventilgehäuse (41) mit dem offenen Ende seiner Ausnehmung (41) aus der Aufnahme (34) weist, wobei der Ventilsitz (48) am Boden (42) des Ventilgehäuses (40) der Ausnehmung (41) abgewandt angeordnet ist, wobei das Ventilglied (60) mit einem Schaft (62) durch eine Bohrung (44b) im Boden (42) hindurch in die Ausnehmung (41) ragt, in der die Schliessfeder (70) angeordnet ist, und wobei die Ausnehmung (41) des Ventilgehäuses (40) mit einem Zulaufbereich (52) des Rückschlagventils (30) verbunden ist, **dadurch gekennzeichnet, dass** im Ventilgehäuse (40) wenigstens ein zumindest annähernd senkrecht zur Längsachse (45) des Ventilglieds (40) verlaufender Zulaufkanal (50) eingebracht ist, über den die Einströmung in das Rückschlagventil (30) erfolgt, und dass die Ausnehmung (41) des Ventilgehäuses (40) an ihrem dem Boden (42) abgewandten Ende mit einem Deckel (78) verschlossen ist.

2. Rückschlagventil nach Anspruch 1, **dadurch gekennzeichnet, dass** die Schliessfeder (70) sich einerseits an der in die Ausnehmung (41) weisenden Innenseite des Bodesn (42) und andererseits an einem mit dem Schaft (62) des Ventilglieds (60) verbundenen Federteller (72) abstützt.

## Claims

1. Non-return valve, in particular for a high-pressure pump of a fuel injection device for an internal combustion engine, with a valve housing (40) which is inserted into a receptacle (34) and in which is guided longitudinally displaceably a piston-shaped valve member (60) which co-operates with a valve seat (48) formed on the valve housing (40), the valve member (60) being acted upon in the closing direction by a prestressed closing spring (70) and in the opening direction by the pressure prevailing in an inflow (44a), the valve member (60) being inserted into the valve housing (40) from the side of the valve seat (48), the valve housing (40) being of one-piece and pot-shaped design, the valve housing (40) having a bottom (42) and a casing region delimiting a recess (41), the valve housing (41) pointing with the open end of its recess (41) out of the receptacle (34), the valve seat (48) being arranged, facing away from the recess (41), on the bottom (42) of the valve housing (40), the valve member (60) projecting with a stem (62) through a bore (44b) in the bottom (42) into the recess (41) in which the closing spring (70) is arranged, and the recess (41) of the valve housing (40) being connected to an inflow region (52) of the non-return valve (30), **characterized in that** the valve housing (40) has introduced in it at least one inflow duct (50) which runs at least approximately perpendicularly with respect to the longitudinal axis (45) of the valve member (40) and via which the inflow into the non-return valve (30) takes place, and **in that** the recess (41) of the valve housing (40) is closed at its end facing away from the bottom (42) by means of a cover (78).

2. Non-return valve according to Claim 1, **characterized in that** the closing spring (70) is supported, on the one hand, on the inside, pointing into the recess (41), of the bottom (42) and, on the other hand, on a spring plate (72) connected to the stem (62) of the valve member (60).

## Revendications

1. Clapet anti-retour notamment pour une pompe haute pression d'une installation d'injection de carburant d'un moteur à combustion interne comprenant un boîtier de clapet (40) placé dans un logement (34), un organe de clapet en forme de piston (60) coulissant longitudinalement dans le boîtier, cet organe coopérant avec un siège de soupape (48) réalisé dans le boîtier de clapet (40),
l'organe de clapet (60) étant sollicité dans le sens de la fermeture par un ressort de fermeture (70), précontraint et dans le sens de l'ouverture, par la pression régnant dans l'arrivée (44a),
l'organe de clapet (60) étant introduit dans le boîtier de clapet (40) en passant par le côté du siège de clapet (48),
le boîtier de clapet (40) étant en une seule pièce, en forme de pot,
le boîtier de clapet (40) ayant un fond (42) ainsi qu'une zone-enveloppe délimitant une cavité (41),
le boîtier de clapet (40) étant tourné par son extrémité ouverte de sa cavité (41) vers la sortie du logement (34),
le siège de clapet (48) au fond (42) du boîtier de clapet (40) étant tourné à l'opposé de la cavité (41),
l'organe de clapet (60) avec sa tige (62) traversant un perçage (44) du fond (42) pour arriver dans la cavité (41) dans laquelle se trouve le ressort de fermeture (70) et
la cavité (41) du boîtier de clapet (40) est reliée à une zone d'alimentation (52) du clapet anti-retour (30),
**caractérisé en ce que**
le boîtier de clapet (40) comporte un canal d'alimentation (50) au moins pratiquement perpendiculaire à l'axe longitudinal (45) de l'organe de clapet (40), canal correspondant à l'entrée dans le clapet anti-retour (30) et
l'extrémité de la cavité (41) du boîtier de clapet (40) à l'opposé du fond (42) est fermée par un couvercle (78).

2. Clapet anti-retour selon la revendication 1,
**caractérisé en ce que**
le ressort de fermeture (70) s'appuie d'un côté contre le côté intérieur du fond (42) tourné vers la cavité (41) et de l'autre côté, contre une coupelle à ressort (72) reliée à la tige (62) de l'organe de clapet (60).
